(19) **Europäisches Patentamt / European Patent Office / Office européen des brevets**

(11) **EP 4 052 903 A1**

(12) # EUROPEAN PATENT APPLICATION

(43) Date of publication:
**07.09.2022 Bulletin 2022/36**

(21) Application number: **21160083.8**

(22) Date of filing: **01.03.2021**

(51) International Patent Classification (IPC):
**B32B 27/08** (2006.01)    **B32B 27/30** (2006.01)
**B32B 27/32** (2006.01)    **C08J 5/18** (2006.01)
**C08L 23/08** (2006.01)    **C08L 23/12** (2006.01)
**C08L 23/14** (2006.01)

(52) Cooperative Patent Classification (CPC):
**C08L 23/14; B32B 27/08; B32B 27/30;**
**B32B 27/32; C08J 7/042; C08J 7/048; C08J 7/052;**
**C08L 23/08; C08L 23/12;** B32B 2250/03;
B32B 2250/24; B32B 2250/242; B32B 2255/10;
B32B 2255/205; B32B 2270/00;    (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Borealis AG**
  **1020 Vienna (AT)**
• **Abu Dhabi Polymers Co. Ltd (Borouge) LLC**
  **Abu Dhabi (AE)**

(72) Inventors:
• **GITSAS, Antonis**
  **4021 Linz (AT)**

• **BERTHELIER, Anthony**
  **92400 Courbevoie (FR)**
• **SEMAAN, Chantal**
  **08008 Barcelona (ES)**
• **BURYAK, Andrey**
  **4021 Linz (AT)**
• **DAS, Subrata Kumar**
  **Abu Dhabi (AE)**
• **SINGH, Raghvendra**
  **Abu Dhabi (AE)**
• **AL TALAFHA, Mohammad**
  **Abu Dhabi (AE)**
• **ZHANG, Susan**
  **Abu Dhabi (AE)**

(74) Representative: **Kador & Partner PartG mbB**
**Corneliusstraße 15**
**80469 München (DE)**

(54) **HIGH-BARRIER BLOWN FILM POLYOLEFIN SOLUTIONS FOR BARRIER COATING**

(57)    The present invention relates to a polyolefin sealant film comprising an outer layer made of an outer layer composition comprising a propylene polymer component AO, wherein the composition has a xylene soluble (XS) fraction of less than 3.5 wt.%, determined according to ISO 16152.

Figure 1

EP 4 052 903 A1

(52) Cooperative Patent Classification (CPC): (Cont.)
B32B 2307/31; B32B 2307/546; B32B 2307/558;
B32B 2307/702; B32B 2307/704; B32B 2307/72;
B32B 2307/7244; B32B 2307/7246;
B32B 2307/732; B32B 2307/734; B32B 2439/06;
B32B 2439/70; C08J 2323/08; C08J 2423/08;
C08J 2423/12; C08J 2423/14

**Description**

The present invention generally relates to a polyolefin sealant film comprising an outer layer for barrier coating, to a laminated polyolefin film comprising the sealant film, to an article comprising the laminated polyolefin film and to the use of the laminated polyolefin film for producing an article, preferably a packaging article. In particular, the present invention relates to a polyolefin sealant film comprising a propylene polymer outer layer.

Laminated structures are widely used in the packaging industry and typical 2-ply to 5-ply laminates are commonly used in various packaging applications. In the majority of these applications, polyethylene (PE) films are used as the sealant film/layer of the laminate, as polyethylene has excellent sealing performance. These polyethylene films are laminated with other substrates to provide stiffness or other desired properties like barrier performance and optical properties (gloss and transparency).

High-barrier blown polyethylene films which comprise ethylene vinyl alcohol (EVOH) or polyamide (such as nylon) as barrier layers are often used. However, these films are not easily recyclable. To satisfy the today's trend to provide recyclable materials for sustainable packaging, alternative polyethylene or polyolefin solutions with improved barrier properties are of high interest.

Polypropylene-based resins have been widely used in the food packaging field because of their excellent tensile strength, rigidity, transparency and the like, and are additionally advantageous due to their non-toxicity and odorlessness. Generally, they are used in the form of cast film (CPP), biaxially oriented film (BOPP) or water-quenched tubular film (TQPP). However it is always challenging to use polypropylene-based resin in vertically upward blown film line due to its inferior melt strength; hence very limited polypropylene resins are suitable for regular blown film packaging applications.

It is an object of the present invention to provide a polyolefin film, which is characterized by sufficient film stiffness along with good optical properties and barrier properties, which is suitable for sustainable packaging applications, and preferably may be produced by a vertically upward blown film process.

The present invention is based on the finding that such a film can be obtained as a polyolefin film having an outer layer for barrier coating, wherein the outer layer is made of a composition comprising a propylene polymer and having a comparatively low xylene soluble (XS) content.

The invention therefore provides a polyolefin sealant film comprising an outer layer made of an outer layer composition comprising a propylene polymer component AO, wherein the outer layer composition has a xylene soluble (XS) fraction of less than 3.5 wt.%, determined according to ISO 16152.

The polyolefin sealant film of the invention is ideally suited for barrier coating of its outer layer as this layer has a clean film surface without surface defects and a low contact angle. After coating, the film has superior barrier properties both as regards its moisture (WVTR) and oxygen (OTR) barrier.

Furthermore, the polyolefin sealant film offers good barrier coating bond strength, i.e. the adhesion of the coated layer on the outer layer is very good, and the surface energy retention is superior, showing a lower decay of surface energy. Further, stiffness of the polyethylene sealant film is sufficient for efficient processing.

The expression "polyolefin (sealant) film" denotes a film that comprises, or consists of, at least one type of olefin polymer, which may be a homopolymer or a copolymer. Preferably, the polyolefin film comprises at least 90 wt.%, more preferably at least 95 wt.% and most preferably at least 98 wt.% of at least one type of olefin polymer, based on the total weight of the polyolefin film. Preferably, the polyolefin film comprises from 90 to 100 wt.%, more preferably from 95 to 100 wt.% and most preferably from 98 to 100 wt.% of at least one type of olefin polymer, based on the total weight of the polyolefin film. Most preferably, the polyolefin film consists of at least one type of olefin polymer. Preferably, the olefin polymer comprises, or consists of, a polymer of ethylene, propylene and/or any of alpha-olefins having from 4 to 10 carbon atoms, which may be homopolymers and copolymers. Preferably, the polyolefin film does not contain non-polyolefin polymers.

Preferably, the polyolefin film comprises at least 80 wt.%, more preferably at least 85 wt.% and most 90 wt.% of at least one ethylene polymer, including ethylene homopolymers and copolymers, based on the total weight of the polyolefin film. Preferably, the polyolefin film comprises up to 95 wt.% of at least one ethylene polymer, including ethylene homopolymers and copolymers, based on the total weight of the polyethylene film.

As is understood within the meaning of this disclosure, the polyolefin film and its respective layers and compositions for layer preparation may also comprise additives, stabilizers, processing aids and/or pigments. Examples of such compounds are antioxidants, UV stabilizers, acid scavengers, nucleating agents, anti-blocking agents, slip agents etc. as well as polymer processing agents (PPA). The compounds may be present in some or only in one layer of the polyethylene film, in the same or different contents. Generally, the compounds are present at 0 to 5 wt.%, based on the weight of the respective composition used for the preparation of the layers or the weight of the respective layer of the film.

The definition and embodiments of the polyolefin film apply to all films of this disclosure, comprising the sealant film, the substrate film and the laminated film.

The percentage (%) is to be understood as weight percentage (wt.%) within the meaning of this disclosure, unless otherwise indicated.

It is also understood within the meaning of this disclosure that the below described embodiments may be combined.

The expression "sealant film" denotes a film that comprises a sealing layer, which is a layer that promotes bonding to another film or layer. Preferably, the sealant film has an outer layer, a core layer, and an inner layer, and optionally at least one sub-skin layer. Preferably, the inner layer is the sealing layer.

### Outer layer

The outer layer of the sealant film of the invention is one of the external layers of the film, which is suitable for coating such as barrier coating. It is made of an outer layer composition.

The outer layer composition has a xylene soluble fraction of less than 3.5 wt.%, preferably of 3.0 wt.% or less, more preferably of 2.5 wt.% or less and still more preferably of 2.0 wt.% or less and most preferably of 1.5 wt.% or less, determined as specified herein below. Usually, the outer layer composition has a xylene soluble fraction of 0.3 wt.% or higher.

The outer layer composition comprises a propylene polymer component AO. Component AO of the outer layer composition preferably has a xylene soluble fraction of less than 3.5 wt.%, preferably of 3.0 wt.% or less, more preferably of 2.5 wt.% or less and still more preferably of 2.0 wt.% or less and most preferably of 1.5 wt.% or less, determined as specified herein below. Usually, component AO of the outer layer composition has a xylene soluble fraction of 0.2 wt.% or higher.

Preferably, component AO has a density of from 890 to 920 $kg/m^3$, more preferably from 895 to 910 $kg/m^3$ and most preferably from 900 to 910 $kg/m^3$.

Preferably, component AO has an $MFR_2$ of from 1.0 to 5.0 g/10min, more preferably from 2.0 to 4.0 g/10min and most preferably from 3.0 to 3.5 g/10min.

Preferably, component AO has a melting point of from 155 to 175 °C, more preferably from 160 to 170 °C and most preferably from 161 to 168 °C.

Preferably, component AO has an MWD (defined as $M_w/M_n$) of at least 5, more preferably at least 5.5. Preferably, component AO has an MWD of from 5.0 to 10.0, more preferably from 5.5 to 9.0 and most preferably from 6.0 to 8.0.

All molecular weight parameters of the propylene polymer were measured according to the GPC conventional method as further described in detail below.

In one embodiment, component AO has an $MFR_2$ of from 3.0 to 3.5 g/10min, a melting point of from 160 to 170 °C and/or an MWD of from 5.5 to 9.

Component AO of the outer layer composition is a propylene polymer.

In one embodiment, component AO of the outer layer composition is a propylene homopolymer.

The expression "propylene homopolymer" denotes a propylene polymer that consists of at least 99.5 wt.-%, preferably at least 99.6 wt.-%, more preferably at least 99.8 wt.-% of propylene units, based on the total weight of the propylene polymer. In one embodiment, only propylene units are detectable in the propylene homopolymer.

Preferably, the propylene homopolymer has a high crystallinity. Preferably, the propylene homopolymer is a (highly) isotactic propylene homopolymer, i.e. it has a content of isotactic pentad fraction (mmmm, determined by $^{13}$C-NMR spectroscopy) of from 95 to 98 %, preferably from 95.5 to 98 % and more preferably from 96 to 97.5 %. The content of isotactic pentad fraction (mmmm) is determined by $^{13}$C-NMR-spectroscopy, as disclosed in WO2013/004781. High crystallinity has positive effects on tensile properties and tensile moduli of the film.

Preferably, the propylene homopolymer is a crystalline propylene polymer. The expression "crystalline" indicates that the propylene homopolymer has a high melting point. Preferably, the propylene homopolymer has a melting point of from 160 to 170 °C, more preferably from 161 to 168 °C.

In one embodiment, the propylene homopolymer has a crystallization temperature, as measured by differential scanning calorimetry (DSC), of at least 110 °C, preferably at least 112 °C. Preferably, the propylene homopolymer has a crystallization temperature of from 110 to 120 °C, more preferably from 111 to 118 °C and most preferably from 112 to 117 °C. The crystallization temperature is determined as disclosed in WO2013/004781.

Preferably, the propylene homopolymer has a relatively high polydispersity index. In one embodiment, the propylene homopolymer has a polydispersity index of at least 5.0, preferably of from 5.0 to 9.0, more preferably from 5.0 to 8.0 and most preferably from 5.0 to 7.0. The polydispersity index is determined as disclosed in WO2018/077838.

Preferably, the propylene homopolymer has a low amount of regio defects. Accordingly, it is preferred that the propylene homopolymer has 2,1 erythro regio-defects of below 1.0 mol%, preferably below 0.5 mol%, more preferably below 0.3 mol%, determined by $^{13}$C-NMR spectroscopy as disclosed in WO2018/077838. In one specific embodiments, no 2,1-erythro regio-defects are detectable.

In one embodiment, the propylene homopolymer has an $MFR_2$ of from 3.0 to 3.5 g/10min, a melting point of from 160 to 170 °C and/or an MWD of from 5.5 to 9.

In one embodiment, the propylene homopolymer has high purity, i.e. having an ash content of not more than 30 ppm, preferably not more than 20 ppm and more preferably not more than 15 ppm, based on the total weight of the propylene homopolymer. The ash content is determined as disclosed in WO2013/004781.

Propylene homopolymers of the above embodiments are disclosed, for example, in WO2013/004781. Therein, also measurement methods of the above described parameters of the propylene homopolymers are also disclosed, as well as processes for the preparation of propylene homopolymers, which may be used in accordance with the present invention.

As the propylene polymer component AO, the product HC320BF produced by Borealis may be used.

Preferably, component AO is present in the outer layer composition of the sealant film in an amount of from 90 to 100 wt.%, more preferably from 95 to 100 wt.% and most preferably from 98 to 100 wt.%. Preferably, the outer layer composition consists of component AO.

The outer layer composition of the sealant film preferably comprises only polyolefin components, more preferably only propylene polymer components.

It is preferred that, in the sealant film of the invention, the outer layer makes up from 5 to 20 %, preferably from 7 to 15 %, of the total thickness of the sealant film.

The outer layer of the sealant film is preferably used for barrier coating, as described herein below.

In a preferred embodiment, the sealant film comprises a barrier coating layer on the outer layer, wherein the barrier coating layer preferably comprises a barrier coating component selected from the group consisting of the metals Al, Au, Ag, Cr, Zn, Ti, Si and Cu and oxides of these metals, and mixtures thereof.

## Core layer

The sealant film of the invention usually comprises a core layer, which is not an external layer of the film and which is present as an intermediate layer in-between the outer and inner layer of the film, either directly adjacent to one or both of these layers or to sub-skin layers, where present. It may be directly adjacent to the outer layer or there may be (a) further layer(s) in-between.

In a preferred embodiment, the sealant film comprises a core layer made of a core layer composition, which comprises, or consists of, a linear low density polyethylene (LLDPE) component, preferably a multimodal copolymer component (AC), and/or a catalytically produced polyethylene component (BC), which is an ethylene copolymer, preferably an ethylene terpolymer (II), having a melt flow rate $MFR_5$ of from 0.6 to 4 g/10min, determined according to ISO 1133, and/or a high pressure produced low density polyethylene (LDPE) component (CC).

## Component AC

In one embodiment of the core layer composition, the core layer comprises, or consists of, a linear low density polyethylene (LLDPE) component AC. Linear low density polyethylenes are well known in the art and are produced in polymerization processes using a catalyst.

Preferably, the linear low density polyethylene component AC is an ethylene copolymer, preferably a multimodal ethylene copolymer, preferably having a density of from 910 kg/m$^3$ to 925 kg/m$^3$ and/or an $MFR_2$ of from 0.5 to 5.0 g/10 min.

Preferably, the ethylene copolymer of component AC has a ratio $MFR_{21}/MFR_2$ of from 13 to 30 and an MWD of 6 or less.

Preferably, the ethylene copolymer comprises, or consists of, a multimodal polymer of ethylene with one or more comonomers selected from alpha-olefins having from 4 to 10 carbon atoms, which has a ratio $MFR_{21}/MFR_2$ of from 13 to 30 and an MWD of 6 or less.

Such multimodal ethylene copolymers are disclosed, for example, in WO2016/083208.

The multimodal ethylene copolymer preferably has an $MFR_2$ of from 0.6 to 2.5 g/10min, and particularly preferred from 1.2 to 1.8 g/10min.

Preferably, the multimodal ethylene copolymer has a density of from 910 to 925 kg/m$^3$, more preferably of from 913 to 922 kg/m$^3$, and particularly preferred of from 915 to 920 kg/m$^3$.

The multimodal ethylene copolymer preferably has a ratio $MFR_{21}/MFR_2$ of from 13 to 30, more preferably from 15 to 25.

The multimodal ethylene copolymer preferably has an MWD of 6 or less and usually more than 1, more preferably of from 3 to 5.

The alpha-olefin comonomers having from 4 to 10 carbon atoms of the multimodal ethylene copolymer are preferably 1-butene and/or 1-hexene.

Preferably, the total amount of comonomers present in the multimodal ethylene copolymer is from 0.5 to 10 mol%, preferably from 1 to 8 mol%, more preferably from 1 to 5 mol%, still more preferably from 1.5 to 5 mol% and most preferably from 2.5 to 4 mol%.

In a particularly preferred embodiment, the multimodal ethylene copolymer is a bimodal copolymer, i.e. it comprises a low molecular weight and a high molecular weight component, and has an $MFR_2$ of from 1.2 to 1.8 g/10 min, and/or an $MFR_5$ of from 3.0 to 5.0 g/10 min, and/or an $MFR_{21}$ of from 20 to 40 g/10 min, and/or a density of from 915 to 920 kg/m$^3$, and/or a molecular weight distribution (MWD) of from 3 to 5, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

In a further preferred embodiment, the ethylene copolymer of component AC comprises, or consists of, an ethylene terpolymer, more preferably a multimodal ethylene terpolymer (I).

Preferably, the multimodal ethylene terpolymer (I) is an ethylene terpolymer having a density of from 910 kg/m$^3$ to 925 kg/m$^3$ and an $MFR_2$ of from 0.5 to 2.0 g/10 min.

The multimodal ethylene terpolymer (I) preferably comprises, or consists of, a multimodal polymer of ethylene with at least two different comonomers selected from alpha-olefins having from 4 to 10 carbon atoms, which has a ratio $MFR_{21}/MFR_2$ of from 13 to 30 and an MWD of 5 or less.

Such multimodal ethylene terpolymers are disclosed, for example, in WO2016/083208. As far as definitions (such as for the "modality" of a polymer) and production methods for these ethylene terpolymers are concerned it is referred to WO2016/083208. Furthermore, all embodiments and preferred embodiments of such ethylene terpolymers as described in WO2016/083208, which have a density in the range of from 910 to 925 kg/m$^3$ are also preferred embodiments of the multimodal ethylene terpolymer (I) in the present disclosure, whether or not explicitly described herein.

The multimodal ethylene terpolymer (I) preferably has an $MFR_2$ of from 0.6 to 2.5 g/10min, and particularly preferred from 1.2 to 1.8 g/10min.

Preferably, the multimodal ethylene terpolymer (I) has a density of from 910 to 925 kg/m$^3$, more preferably from 913 to 922 kg/m$^3$, and particularly preferred from 915 to 920 kg/m$^3$.

The multimodal ethylene terpolymer (I) preferably has a ratio $MFR_{21}/MFR_2$ of from 13 to 30, more preferably from 15 to 25.

The at least two alpha-olefin comonomers having from 4 to 10 carbon atoms of the multimodal ethylene terpolymer (I) are preferably 1-butene and 1-hexene.

Preferably, the total amount of comonomers present in the multimodal ethylene terpolymer (I) is from 0.5 to 10 mol%, more preferably from 1 to 8 mol%, even more preferably from 1 to 5 mol%, still preferably from 1.5 to 5 mol% and most preferably from 2.5 to 4 mol%.

The multimodal ethylene terpolymer (I), which preferably is a bimodal terpolymer, preferably comprises, or consists of, an ethylene polymer component (A) and an ethylene polymer component (B), wherein the ethylene polymer component (A) has higher $MFR_2$ than the ethylene polymer component (B).

Preferably, the ethylene polymer component (A) has an $MFR_2$ of from 1 to 50 g/10 min, more preferably from 1 to 40 g/10min, even more preferably from 1 to 30 g/10min, still more preferably from 2 to 20 g/10min, still more preferably from 2 to 15 g/10min and most preferably from 2 to 10 g/10min.

The ratio of the $MFR_2$ of ethylene polymer component (A) to the $MFR_2$ of the ethylene polymer component (B) is from 2 to 50, preferably from 5 to 40, more preferably from 10 to 30, even more preferably from 10 to 25 and most preferably from 11 to 25.

Preferably, the ethylene polymer component (A) comprises a different comonomer than the ethylene polymer (B).

Preferably, the ethylene polymer component (A) has lower amount (mol%) of comonomer than the ethylene polymer component (B), more preferably, the ratio of [the amount (mol%) of the alpha-olefin comonomer having from 4 to 10 carbon atoms comonomer present in ethylene polymer component (A)] to [the amount (mol%) of at least two alpha-olefin comonomers having from 4 to 10 carbon atoms of the final multimodal ethylene terpolymer] is of from 0.10 to 0.60, preferably from 0.15 to 0.50.

Preferably, the alpha-olefin comonomer having from 4 to 10 carbon atoms of the ethylene polymer component (A) is 1-butene and the alpha-olefin comonomer having from 4 to 10 carbon atoms of the ethylene polymer component (B) is 1-hexene.

Preferably, the ethylene polymer component (A) has different, preferably higher, density than the density of the ethylene polymer component (B).

The density of the ethylene polymer component (A) is preferably from 925 to 950 kg/m$^3$, more preferably from 930 to 945 kg/m$^3$.

Preferably, the multimodal ethylene terpolymer (I) comprises the ethylene polymer component (A) in an amount of from 30 to 70 wt.%, more preferably from 40 to 60 wt.%, even more preferably from 35 to 50 wt.%, still more preferably from 40 to 50 wt.%; and the ethylene polymer component (B) in an amount of from 70 to 30 wt.%, more preferably from 60 to 40 wt.%, even more preferably from 50 to 65 wt.%, still more preferably from 50 to 60 wt.%, based on the total amount (100 wt.%) of the multimodal ethylene terpolymer (I).

Most preferably, the multimodal ethylene terpolymer (I) consists of the ethylene polymer components (A) and (B) as the sole polymer components. Accordingly, the split between the ethylene polymer component (A) to the ethylene polymer component (B) is (30 to 70):(70 to 30) preferably (40 to 60):(60 to 40), more preferably (35 to 50):(65 to 50), still more preferably (40 to 50):(50 to 60).

In a particularly preferred embodiment, the multimodal ethylene terpolymer (I) is a bimodal terpolymer, i.e. comprises a low molecular weight and a high molecular weight component, and has an $MFR_2$ of from 1.2 to 1.8 g/10min, and/or an $MFR_5$ of from 3.0 to 5.0 g/10min, and/or an $MFR_{21}$ of from 20 to 40 g/10min, and/or a density of from 915 to 920 kg/m³, and/or a molecular weight distribution (MWD) of from 3.0 to 5.0, and/or an $M_n$ of from 15 to 25 kg/mol, and/or an $M_w$ of from 80 to 115 kg/mol, and/or an $MFR_{21}/MFR_2$ ratio ($FRR_{21/2}$) of from 15 to 25, and/or an $MFR_{21}/MFR_5$ ratio ($FRR_{21/5}$) of from 6 to 9.

Preferred as the multimodal ethylene terpolymers (I) are also commercially available products such as Anteo™ from Borealis or Borouge having the properties as required herein, especially Anteo™ FK1828 or Anteo™ FK1820.

Preferably, component AC is present in the core layer composition in an amount of from 10 to 80 wt.%, more preferably from 25 to 70 wt.%, still more preferably from 40 to 65 wt.% and most preferably from 50 to 60 wt.%.

*Component BC*

In a further embodiment of the core layer composition, the core layer comprises, or consists of, a catalytically produced polyethylene component (BC), which is an ethylene copolymer, preferably an ethylene terpolymer (II), having a melt flow rate $MFR_5$ of from 0.6 to 4 g/10min.

Preferably, the ethylene copolymer component BC has a density of from 920 to 940 kg/cm³ and and/or an $MFR_2$ of from 0.1 to 2 g/10min.

Preferably, the terpolymer (II) comprises, or consists of,

a) a low molecular weight polymer which is a binary copolymer of ethylene and a $C_4$ to $C_{12}$ alpha-olefin and

b) a high molecular weight polymer which is either a binary copolymer of ethylene and 1-butene, if the low molecular weight polymer of a) is a binary copolymer of ethylene and a $C_6$ to $C_{12}$ alpha-olefin, or a terpolymer of ethylene, 1-butene and a $C_6$ to $C_{12}$ alpha-olefin.

Such bimodal ethylene terpolymers are, for example, disclosed in WO03/066698. As far as definitions (such as for the "modality" of a polymer) and production methods for these ethylene terpolymers are concerned, it is referred to WO03/066698. Furthermore, all embodiments and preferred embodiments of such ethylene terpolymers as described in WO03/066698, which have a density in the range of from 928 to 940 kg/m³, are also preferred embodiments of the ethylene terpolymer (II) of the present disclosure, whether or not explicitly described herein.

Preferably, the terpolymer (II) has a density in the range of from 928 to 940 kg/m³, more preferably from 930 to 939 kg/m³.

Preferably, the $C_4$ to $C_{12}$ alpha-olefin of the low molecular weight copolymer fraction is selected from the group consisting of 1-butene, 1-hexene, 4-methyl-1-pentene, 1-octene and 1-decene.

Furthermore, preferably the $C_6$ to $C_{12}$ alpha-olefin of the high molecular weight copolymer fraction is preferably selected from the group consisting of 1-hexene, 4-methyl-1-pentene, 1-octene and 1-decene.

Preferably, the terpolymer (II) comprises, or consists of, a) a low molecular weight homopolymer of ethylene and b) a high molecular weight terpolymer of ethylene, 1-butene and a $C_6$ to $C_{12}$ alpha-olefin, preferably a high molecular weight terpolymer of ethylene, 1-butene and 1-hexene.

The weight average molecular weight of the terpolymer (II) is preferably between 190,000 to 400,000 g/mol, more preferably between 200,000 to 300,000 g/mol. The low molecular weight polymer fraction has a weight average molecular weight preferably of from 4,500 to 55,000 g/mol, more preferably of from 5,000 to 50,000 g/mol, and the high molecular weight polymer has a weight average molecular weight preferably of from 450,000 to 1,000,000 g/mol, more preferably of from 500,000 to 1,000,000 g/mol.

The terpolymer (II) preferably has a melt flow rate $MFR_2$ of from 0.1 to 2 g/10min, more preferably from 0.5 to 1.3 g/10min.

The terpolymer (II) preferably has a melt flow rate $MFR_5$ of from 0.6 to 4 g/10min, more preferably from 0.7 to 3 g/10min.

The terpolymer (II) preferably has a melt flow rate $MFR_{21}$ of from 10 to 50 g/10min, more preferably from 15 to 45 g/10min.

The low molecular weight polymer fraction of the terpolymer (II) preferably has a melt flow rate $MFR_2$ of from 200 to 800 g/10min, more preferably from 300 to 600 g/10min.

The terpolymer (II) preferably comprises from 30 to 60 wt.%, more preferably from 35 to 50 wt.% and most preferably from 38 to 45 wt.% of the low molecular weight polymer fraction, the remainder being preferably the high molecular weight polymer fraction.

The overall comonomer content in the total polymer is preferably from 1 to 7 mol%, more preferably from 2 to 6 mol%.

Preferably, in the low molecular weight polymer the comonomer content is from 0 to 2.5 mol%, more preferably from 0 to 2 mol%. In the high molecular weight polymer the comonomer content is preferably from 2.5 to 11 mol%, more preferably from 3 to 10 mol%.

In the embodiments, wherein the terpolymer (II) comprises, or consists of, a) a low molecular weight homopolymer of ethylene and b) a high molecular weight terpolymer of ethylene, 1-butene and 1-hexene, it is preferred that the content of 1-butene in the final polymer is from 1.0 to 2.0 wt.% and the content of 1-hexene is from 4.0 to 6.0 wt.%.

Preferably, the terpolymer (II) has a viscosity $\eta$ measured at 0.05 rad/s of from 10,000 to 65,000 Pa·s, more preferably from 15,000 to 60,000 Pa·s, and most preferably from 20,000 to 55,000 Pa·s.

Preferred multimodal terpolymer (II) is also the commercially available product BorShape™, such as BorShape™ FX1001 and BorShape™ FX1002, from Borealis.

FX1001 is a bimodal LLDPE terpolymer. The low molecular weight fraction is a homopolymer of ethylene having an $MFR_2$ of 400 g/10min, preferably produced in a loop reactor. In the high molecular weight fraction, preferably produced in a gas phase reactor, ethylene is co-polymerized with 1-butene and 1-hexene as comonomers. The density of the final resin is 931 kg/m$^3$ and the $MFR_5$ is 0.85 g/10min. The split (LMW/HMW) is 39/61. FX1001 has an Mw/Mn of about 14 (from 13 to 15). The content of 1-butene in the final polymer is 1.5 wt.% and the content of 1-hexene is 5.5 wt.%. The viscosity $\eta$, measured at 0.05 rad/s, is 52000 (+/-5000) Pa·s.

FX1002 is a bimodal MDPE terpolymer. The low molecular weight fraction is a homopolymer of ethylene having an $MFR_2$ of 400 g/10min, preferably produced in a loop reactor. In the high molecular weight fraction, preferably produced in a gas phase reactor, ethylene is co-polymerized with 1-butene and 1-hexene as comonomers. The density of the final resin is 937 kg/m$^3$, the $MFR_5$ is 2 g/10min and the $MFR_{21}$ is 42 g/10min. The split (LMW/HMW) is 43/57. FX1002 has an $M_w/M_n$ of about 12 (from 11 to 13). The content of 1-butene in the final polymer is 1.5 wt.% and the content of 1-hexene is 4.5 wt.%. The viscosity $\eta$, measured at 0.05 rad/s, is 23000 (+/-3000) Pa·s.

Preferably, component BC is present in the core layer composition in an amount of from 5 to 75 wt.%, more preferably from 15 to 65 wt.%, still more preferably from 30 to 60 wt.% and most preferably from 35 to 55 wt.%.

*Component CC*

In a still further embodiment of the core layer composition, the core layer comprises, or consists of, a high pressure produced low density polyethylene (LDPE) component (CC). LDPE are well known in the art and are produced in high pressure processes usually performed in a tubular reactor or an autoclave.

LDPE and their production are, for example, described in WO2017/055174, page 9, line 29, to page 12, line 6, to which it is referred.

Preferably, the LDPE component CC has a density of from 910 to 930 kg/cm$^3$ and/or an $MFR_2$ of from 0.1 to 2.5 g/10min.

The LDPE component CC preferably has a density of from 918 to 928 kg/m$^3$, more preferably from 919 to 927 kg/m$^3$ and most preferably from 920 to 925 kg/m$^3$.

Preferably, the LDPE component CC has an $MFR_2$ of from 0.3 to 1.7 g/10min, more preferably from 0.4 to 1.5 g/10min and most preferably from 0.5 to 1.0 g/10min.

In a particularly preferred embodiment, the LDPE component CC has an $MFR_2$ of from 0.5 to 1.0, and/or a density of from 920 to 925 kg/m$^3$, and/or an MWD of from 5 to 8, and/or an $M_n$ of from 12 to 18 kg/mol, and/or an $M_w$ of from 85 to 130 kg/mol.

All molecular weight parameters of LDPE were measured by the GPC viscosity method as further described in detail below.

As the LDPE component CC, resin FT5230 as produced by Borealis may be used.

Preferably, component CC is present in the core layer composition in an amount of from 5 to 40 wt.%, more preferably from 5 to 35 wt.%, still more preferably from 10 to 30 wt.% and most preferably from 15 to 25 wt.%.

In one embodiment, the core layer composition comprises, or preferably consists of, components AC and BC.

Preferably, all components present in the core layer composition comprise, or preferably consist of, ethylene polymers, including ethylene homopolymers and ethylene copolymers.

It is preferred that, in the sealant film of the invention, the core layer makes up from 35 to 65 %, more preferably from 40 to 60 %, and most preferably from 45 to 55 % of the total thickness of the sealant film.

*Inner layer*

The sealant film of the invention further usually comprises an inner layer, which is an external layer of the sealant film on the side opposite to the outer layer.

Preferably, the inner layer composition, of which the inner layer is formed, comprises a component AI which is an ethylene copolymer.

Preferably, the ethylene copolymer component AI comprises, or consists of, any one of the embodiments described for component AC herein above.

Preferably, component AI is present in the inner layer composition in an amount of from 50 to 95 wt.%, more preferably from 60 to 90 wt.% and most preferably from 70 to 85 wt.%.

Furthermore, the inner layer composition preferably comprises a component BI, which is a high-pressure produced LDPE.

Preferably, the LDPE component BI comprises, or consists of, any one of the embodiments described for component CC herein above.

Preferably, component BI is present in the inner layer composition in an amount of from 5 to 40 wt.%, more preferably from 10 to 35 wt.% and most preferably from 15 to 30 wt.%.

Preferably, the inner layer comprises, or consists of, components AI and BI in a weight ratio of from 60:40 to 95:5, preferably from 70:30 to 90:10 and most preferably from 75:25 to 85:15, optionally further comprising an anti-block masterbatch, for example Polybatch FSU-105-E (supplied by A. Schulman (LyondellBasell)), in an amount of 3 wt.% or below, more preferably 2 wt.% or below.

Preferably, all polymer components present in the inner layer composition comprise, or preferably consist of, ethylene polymers, including ethylene homopolymers and ethylene copolymers.

It is preferred that, in the sealant film of the invention, the inner layer makes up from 5 to 25 %, more preferably from 7 to 20 % and most preferably from 8 to 15 %, of the total thickness of the sealant film.

### Sub-skin layer

The sealant film according to the invention may contain one or more sub-skin layers.

Such sub-skin layers are intermediate layers of the film, and are, for example, present in-between the outer layer and the core layer and/or in-between the core layer and the inner layer of the film.

If more than one sub-skin layer is present in the film of the invention the sub-skin layers may have the same or different composition, which may be selected from the embodiments as described herein below.

Preferably, the sub-skin layers are made of a sub-skin layer composition which comprises a component AS, which is an ethylene copolymer.

Preferably, the ethylene copolymer component AS comprises, or consists of, the polyethylene of any one of the embodiments described for the component AC herein above.

Preferably, component AS is present in the sub-skin layer composition in an amount of from 50 to 95 wt.%, more preferably from 60 to 90 wt.% and most preferably from 70 to 85 wt.%.

Furthermore, the sub-skin layer composition preferably comprises a component BS, which is a high-pressure produced LDPE.

Preferably, the LDPE component BS comprises, or consists of, the LDPE of any one of the embodiments described for component CC herein above.

Preferably, component BS is present in the sub-skin layer composition in an amount of from 5 to 40 wt.%, more preferably from 10 to 35 wt.% and most preferably from 15 to 30 wt.%.

Preferably, the sub-skin layer composition comprises, or consists of, components AS to BS in a weight ratio of from 60:40 to 95:5, preferably from 70:30 to 90:10, and most preferably from 75:25 to 85:15.

Preferably, all polymer components present in the sub-skin layer composition comprise, or preferably consist of, ethylene polymers, including ethylene homopolymers and ethylene copolymers.

It is preferred that, in the sealant film of the invention, the sub-skin layer makes up from 5 to 30 %, more preferably from 10 to 25 %, and most preferably from 12 to 20 % of the total thickness of the sealant film. If more than one sub-skin layers are present in the sealant film, these values apply for each of them.

### Sealant film

The polyolefin sealant film according to the invention comprises an outer layer, a core layer and an inner layer, and optionally one or more sub-skin layers.

In a preferred embodiment, the sealant film comprises, or consists of, an outer layer, a first sub-skin layer, a core layer, a second sub-skin layer and an inner layer, in any one of the embodiments as described herein, wherein the layers are present in the film in this sequence and are adjacent to each other.

The preferred compositions of the respective layers are as described above.

Preferably, at least one of the core layer and inner layer, and optionally one or more sub-skin layers, is made of a composition comprising a linear low density polyethylene (LLDPE) component, preferably a multimodal copolymer component AC, and/or a catalytically produced polyethylene component BC, which is an ethylene copolymer, preferably an ethylene terpolymer (II), having a melt flow rate $MFR_5$ of from 0.6 to 4 g/10min, determined according to ISO 1133, and/or a high pressure produced low density polyethylene (LDPE) component CC.

Preferably, the sealant film according to the invention comprises from 40 to 70 wt.% of the AC component; and/or from 15 to 35 wt.% of the BC component; and/or from 5 to 15 wt.% of the CC component, based on the total weight of the sealant film.

The sealant film according to the invention usually has a total thickness of from 20 to 75 $\mu$m, preferably from 25 to 60 $\mu$m such as 30 to 50 $\mu$m.

Preferably, the sealant film is a non-oriented film. The expression "non-oriented" film encompasses any film, which was not intentionally stretched after the film production by more than 200 %, based on the dimensions of the produced product. Preferably, the film was not stretched, by any subsequent heating and/or by using the stretching equipment (e.g. rollers) as in the production of biaxially oriented films (BOPP/BOPE) or uniaxially oriented films.

Preferably, the polymeric parts of all layers of the sealant film consist of polyolefins. Preferably, the polymeric parts of the core layer and inner layer, and the sub-skin layers, if present, consist of ethylene polymers. Further preferred, the polymeric parts of the outer layer consist of propylene polymers.

The sealant film according to the invention has good barrier properties already in the non-coated state.

Preferably, the sealant film (before coating) has a WVTR (38 °C; 90 % RH) of 10 $g/m^2/d$ or less, more preferably of 9.0 $g/m^2/d$ or less, such as 8.4 $g/m^2/d$ or less, determined according to ISO 15106-2. Usually, the WVTR is more than 2 $g/m^2/d$, such as more than 3 $g/m^2/d$.

Furthermore, the sealant film (before coating) preferably has an OTR of 5500 $cm^3/m^2/d$ or less, more preferably of 4000 $cm^3/m^2/d$ or less, determined according to ISO 15105-1 (23 °C; 100 % $O_2$; 0 % RH), as described herein below. Usually, the OTR is more than 800 $cm^3/m^2/d$, such as more than 1000 $cm^3/m^2/d$.

The sealant film of the invention has a good stiffness.

Preferably, the film of the invention has a tensile modulus in machine direction (MD), determined according to ISO 527-3, of 250 MPa or more, such as 300 MPa or more. Usually the MD tensile modulus is less than 500 MPa.

Preferably, the film of the invention has a tensile modulus in transverse direction (TD), determined according to ISO 527-3, of 200 MPa or more, such as 250 MPa or more. Usually the TD tensile modulus is less than 400 MPa.

Preferably, the film of the invention has a tensile stress at break (tensile strength) in machine direction (MD) (1 % secant), determined according to ISO 527-3, of 40 MPa or more, such as 45 MPa or more. Usually, the MD tensile stress at break is less than 70 MPa.

Preferably, the film of the invention has a tensile stress at break (tensile strength) in transverse direction (TD) (1 % secant), determined according to ISO 527-3, of 30 MPa or more, such as 35 MPa or more. Usually, the TD tensile stress at break is less than 60 MPa.

If higher stiffness is desired, it is preferred that the core layer comprises higher contents of, or consists of, component AC and/or BC.

The sealant film has an excellent contact angle as measured on its outer layer. Low contact angles (before coating) are required for good wetting of the surface for coating and good adhesion of the coating layer.

Preferably, the sealant film (on its outer layer) has a contact angle of less than 90°, such as less than 80°. Usually, the contact angle is more than 60°.

The sealant film further shows excellent performance under optical microscope, showing a smooth outer layer surface, with almost no surface defects present.

The film may be produced by any conventional method for producing blown films.

The different polymer components in any of the layers of the film are typically intimately mixed prior to layer formation, for example using a twin screw extruder, preferably a counter-rotating extruder or a co-rotating extruder. Then, the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The Example section of this disclosure further describes in detail one way of producing sealant films with indicated conditions.

***Barrier coated sealant film***

The present invention also relates to a barrier coated sealant film comprising the sealant film according to any one of the embodiments, as described herein, and a barrier coating layer, preferably an inorganic barrier coating layer, which has been applied to the outer layer of the sealant film.

Coatings and barrier coatings are well-known processes, in which an external layer of the film is coated with a thin barrier material layer. By definition, barrier coatings provide barrier properties, preferably against water vapor and gases. They are used when the desired function is to prevent water vapor or gases (such as oxygen) from migrating into and through a film or laminate.

Preferably, barrier coating layers are applied by a vapor depositing technique. Generally, vapor deposition coating of a barrier layer onto a polymer film is carried out by means of a continuous method of physical or chemical vapor deposition. Various coating layers may be applied by this type of methods.

Preferably, the sealant film comprises a barrier coating layer on the outer layer, which comprises, or consists of, a barrier coating component which is a metal and/or a metal oxide.

Preferably, the barrier coating component is selected from the group consisting of the metals Al, Au, Ag, Cr, Zn, Ti, Si and Cu and oxides of these metals, and mixtures thereof. The most preferred metal is aluminum (Al). The most preferred metal oxide is an aluminum oxide ($AlO_x$), such as $Al_2O_3$.

Generally, the thickness of the coating layer may vary from 5 and 200 nm. Below 5 nm the barrier properties may be too low to be useful; and above 200 nm, the coating is less flexible and, thus, more prone to cracking when applied onto a flexible substrate.

Preferably the thickness of the coating layer is of from 5 to 100 nm, more preferably from 8 to 50 nm.

Barrier properties of the coated sealant film according to the invention are further improved.

Preferably, the sealant film (after coating) has a WVTR (38 °C; 90 % RH) of less than 1.5 g/m$^2$/d, more preferably of less than 1.0 g/m$^2$/d such as less than 0.8 g/m$^2$/d, determined according to ISO 15106-2. Usually, the WVTR is at least 0.2 g/m$^2$/d.

Furthermore, the sealant film (after coating) preferably has an OTR (23 °C; 100 % $O_2$; 0 % RH) of less than 200 cm$^3$/m$^2$/d, more preferably less than 150 cm$^3$/m$^2$/d such as 130 cm$^3$/m$^2$/d, determined according to ISO 15105-1. Usually, the OTR is at least 10 cm$^3$/m$^2$/d.

The barrier coated sealant film of the invention has an excellent coating (e.g. metal) adhesion and surface energy retention, as measured by the tape test described herein below, and as can be seen from the decay of the surface energy, expressed in dyn/cm per day, respectively.

Preferably, the coated, preferably metallized, sealant film after 14 days retains a surface energy of 35 dyn/cm or more, determined as described herein below.

Preferably, the coated, preferably metallized, sealant film after 21 days retains a surface energy of 30 dyn/cm or more, more preferably 35 dyn/cm, determined as described herein below.

Preferably, the coated, preferably metallized, sealant film after 46 days retains a surface energy of 30 dyn/cm or more, more preferably 35 dyn/cm, determined as described herein below.

The coated, preferably metallized, sealant film further shows excellent performance under optical microscope, showing a smooth coated outer layer surface, with almost no surface defects present.

### *Laminated film*

The present invention further relates to a laminated polyolefin film comprising the polyolefin sealant film according to any one of the above described embodiments and a substrate film.

The laminated film preferably has a water vapor transmission rate (WVTR) (38 °C; 90 % RH) of less than 1.0 g/m$^2$/d, more preferably less than 0.5 g/m$^2$/d, such as less than 0.3 or 0.25 g/m$^2$/d, determined according to ISO 15106-2. Usually, the WVTR is at least 0.05 g/m$^2$/d.

The laminated film preferably has an oxygen transmission rate (OTR) (23 °C; 100 % $O_2$; 0 % RH) of less than 25 cm$^3$/m$^2$/d, more preferably less than 15 cm$^3$/m$^2$/d and most preferably less than 10 cm$^3$/m$^2$/d, such as less than 5 cm$^3$/m$^2$/d, determined according to ISO 15105-1. Usually, the OTR is at least 1 cm$^3$/m$^2$/d.

The laminated film preferably has a dart drop impact (DDI) of at least 130 g, more preferably at least 145 g, such as at least 150 g, determined according to ASTM D1709, Method A. Usually, the DDI is not more than 170 g.

The laminated film preferably has a tensile modulus in machine direction (MD) of at least 800 MPa, more preferably at least 1000 MPa, such as at least 1100 MPa, determined according to ISO 527-3. Usually, the MD tensile modulus is not more than 1500 MPa.

The laminated film preferably has a thickness of from 50 to 90 μm, more preferably from 50 to 80 μm, such as from 50 to 70 μm.

The present invention further relates to a laminated polyolefin film comprising a substrate film and a sealant film, wherein the laminated polyolefin film has:

a) a water vapor transmission rate (WVTR) (38 °C; 90 % RH) of less than 1.0 g/m$^2$/d, more preferably less than 0.5 g/m$^2$/d such as less than 0.3 or 0.25 g/m$^2$/d, and preferably at least 0.05 g/m$^2$/d, determined according to ISO 15106-2;

b) an oxygen transmission rate (OTR) (23 °C; 100 % $O_2$; 0 % RH) of less than 25 $cm^3/m^2/d$, preferably less than 15 $cm^3/m^2/d$, more preferably less than 10 $cm^3/m^2/d$, such as less than 5 $cm^3/m^2/d$, and preferably at least 1 $cm^3/m^2/d$, determined according to ISO 15105-1;

c) a dart drop impact (DDI) of at least 145 g, such as at least 150 g, and preferably not more than 170 g, determined according to ASTM D1709, Method A;

d) a tensile modulus in machine direction (MD) of at least 800 MPa, more preferably at least 1000 MPa, such as at least 1100 MPa, and preferably not more than 1500 MPa, determined according to ISO 527-3; and

e) a thickness of from 50 to 90 $\mu$m, more preferably from 50 to 80 $\mu$m, such as from 50 to 70 $\mu$m.

In one embodiment of the laminated film described directly above, the laminated film comprises a polyolefin sealant film according to any one of the embodiments described in this disclosure.

The following disclosure applies to any one of the embodiments of the laminated film, i.e. any embodiments described in the above disclosure.

The laminated film preferably has a tensile modulus in transverse direction (TD) of at least 800 MPa, more preferably at least 1000 MPa, such as at least 1150 MPa, determined according to ISO 527-3. Usually, the TD tensile modulus is not more than 1600 MPa.

The laminated film preferably has a relative tear resistance in machine direction (MD) of at least 30 N/mm, more preferably at least 35 N/mm, such as at least 36 N/mm, determined as described herein below. Usually, the MD relative tear resistance is not more than 60 N/mm.

The laminated film preferably has a relative tear resistance in transverse direction (TD) of at least 50 N/mm, more preferably at least 60 N/mm, such as at least 70 N/mm, determined as described herein below. Usually, the TD relative tear resistance is not more than 100 N/mm.

In one embodiment, the laminated polyolefin film has an oxygen transmission rate (OTR) (23 °C; 100 % $O_2$; 0 % RH) of less than 25 $cm^3/m^2/d$, determined according to ISO 15105-1; and/or a water vapor transmission rate (WVTR) (38 °C; 90 % RH) of less than 0.5 $g/m^2/d$, determined according ISO 15106-2.

In one embodiment, the laminated film comprises the propylene polymer component AO in a content of less than 10 wt.%, preferably less than 8 wt.%, more preferably less than 7 wt.%, based on the total weight of the laminated polyolefin film.

In one embodiment, the laminated film comprises one or more ethylene polymers in a content of at least 90 wt.%, preferably at least 92 wt.%, more preferably at least 93 wt.%, based on the total weight of the laminated polyolefin film.

In one embodiment, the laminated film comprises the propylene polymer component AO in a content of less than 10 wt.%, preferably less than 8 wt.%, more preferably less than 7 wt.%, and one or more ethylene polymers in a content of at least 90 wt.%, preferably at least 92 wt.%, more preferably at least 93 wt.%, based on the total weight of the laminated polyolefin film. In embodiments, where all polymeric components of the laminated film consist of polyolefins, the laminated film is easily recyclable and thus a sustainable laminated film.

For the production of the laminated film comprising a sealant film and a substrate film, non-coated or coated sealant films may be used, preferably a coated, such as a metallized, sealant film is used.

The laminated film is obtained by laminating the sealant film to the substrate film. This may be affected in any conventional lamination device using conventional lamination methods, such as adhesive lamination, including both solvent-based and solvent-less adhesive lamination using any conventional, commercially available adhesive, such as LA7825 (supplied by Henkel Corporation). Optionally, the adhesive may be mixed with a hardener, e.g. in a ratio of adhesive to hardener of 2:1. Lamination may alternatively be carried out without any adhesive, as sandwich lamination with or without a melt web, which may be pressed between the substrates. Such melt web may be any conventional melt web material based on polyethylene, such as LDPE. Lamination may further be performed via extrusion coating technique. All these lamination methods are well known in the art and described in literature. In the Example section herein, one lamination method is described in details.

The sealant film is laminated to the substrate film via their external layers.

In one embodiment of the laminated film, the outer layer (coated or non-coated) of the sealant film is laminated to an external layer of the substrate film.

In another embodiment of the laminated film, the inner layer of the sealant film is laminated to an external layer of the substrate film.

In a preferred embodiment of the laminated film, the coated outer layer of the sealant film is laminated to an external layer, preferably the outer layer, of the substrate film.

*Substrate film*

The substrate film is preferably a polyolefin film, more preferably a polyethylene film, which comprises ethylene polymer(s), preferably consists of, ethylene polymer(s).

Preferably, the substrate film comprises at least an outer layer, a core layer and an inner layer, and optionally one or more sub-skin layers, wherein the sub-skin layers are present in-between the outer layer and the core layer and/or in-between the inner layer and the core layer. The outer and inner layer may be similar.

Preferably, all layers of the substrate film are made of a composition comprising, or consisting of, olefin polymers, preferably ethylene polymers.

In one embodiment, the core layer of the substrate film is made of a composition comprising an ethylene polymer component SC, having a density of from 920 to 940 $kg/cm^3$ and an $MFR_2$ of from 0.1 to 2.0 g/10min, determined according to ISO 1133.

Preferably, the ethylene polymer component SC comprises, or consists of, any one of the embodiments described for component BC herein.

Preferably, component SC is present in the core layer of the substrate film in an amount of from 50 to 90 wt.%, preferably from 60 to 80 wt.%.

Preferably, one or more layers of the substrate film are made of a composition comprising an HDPE component.

In one embodiment, the substrate film is a non-oriented film, as defined herein above.

In another embodiment, the substrate film is a biaxially oriented film.

In one preferred embodiment, the substrate film is a uniaxially oriented, preferably in machine direction oriented (MDO), film.

Production methods for oriented films are well known in the art. One production method of an MDO film is described in detail in the Example section herein. In short, a primary film is prepared as a cast film or blown film, as described herein above.

Preferably, the primary film has a thickness of from 80 to 250 $\mu$m, preferably from 90 to 225 $\mu$m and more preferably from 100 to 200 $\mu$m.

Selection of the thickness of the primary film before orientation may depend on the draw or stretch ratio and the desired final thickness of the oriented films. The primary film is then stretched at least 3 times, such as from 3 to 20 times to its original length in the machine direction. Most preferred films of the invention are stretched in a draw ratio of from 1:4 to 1:10 such as from 1:5 to 1:7.

The obtained thickness of the oriented film is preferably in the range of up to 40 $\mu$m, such as in the range of from 10 to 40 $\mu$m, more preferably from 12 to 35 $\mu$m, and most preferably from 15 to 30 $\mu$m.

In one embodiment, the substrate film is uniaxially oriented, preferably in machine direction oriented (MDO), with a draw ratio of from 1:4 to 1:10, preferably from 1:5 to 1:7, and preferably has a thickness of from 15 to 30 $\mu$m.

***Article and Use***

The present invention also relates to an article comprising the laminated polyolefin film according to any one of the embodiments described herein.

Finally, the present invention relates to the use of the laminated polyolefin film according to any one of the embodiments described herein for producing an article.

Preferably, the article is a vertical or horizontal form fill seal packaging, pouch, sack or bag.

In the following, the invention will further be illustrated by way of examples which refer to the following figures showing:

Figure 1: Tensile modulus and strength of the sealant films before coating

Figure 2: Surface energy (dyn/cm) of the sealant films over time after coating by metallization

Figure 3: Metal adhesion of coated sealant films

Figure 4: Xylene soluble (XS) fraction of film compositions used in the outer surface layer of the sealant films

Figure 5: Film surface images by optical microscope before coating

Figure 6: Film surface images by optical microscope after coating by metallization

*Measurement and Determination Methods*

The following definitions of terms and measurement and determination methods apply to the above general description of the invention as well as to the below examples. Unless otherwise indicated, the measurements were performed on sealant films with a thickness of about 35 $\mu$m, MDO substrate films with a thickness of 21.5 $\mu$m and/or laminated films with a thickness of from 61 to 62 $\mu$m.

**a)** Melt Flow Rate MFR

The melt flow rate (MFR) was determined according to ISO 1133 and was indicated in g/10 min. The higher the melt flow rate, the lower the viscosity of the polymer. The MFR is determined at 190 °C for polyethylene and at 230 °C for polypropylene, at a loading of 2.16 kg ($MFR_2$), 5.00 kg ($MFR_5$) or 21.6 kg ($MFR_{21}$).

The quantity FRR ((melt) flow rate ratio) is an indication of molecular weight distribution and denotes the ratio of flow rates at different loadings. Thus, $FRR_{21/5}$ denotes the value of $MFR_{21}/MFR_5$ and $FRR_{21/2}$ denotes the value of $MFR_{21}/MFR_2$.

**b)** Density

Density of the polymer was measured according to ISO 1183-1:2004 (method A) on compression moulded specimen prepared according to EN ISO 1872-2 (Feb 2007) and is given in $kg/m^3$.

**c)** GPC

*(1) GPC conventional method*

Molecular weight averages ($M_z$, $M_w$ and $M_n$), molecular weight distribution (MWD, defined as $M_w/M_n$) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-1:2003, ISO 16014-2:2003, ISO 16014-4:2003 and ASTM D 6474-12 using the following formulas:

$$M_n = \frac{\sum_{i=1}^N A_i}{\sum_{i=1}^N (A_i/M_i)} \quad (1)$$

$$M_w = \frac{\sum_{i=1}^N (A_i x M_i)}{\sum_{i=1}^N A_i} \quad (2)$$

$$M_z = \frac{\sum_{i=1}^N (A_i x M_i^2)}{\sum_{i=1}^N (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, Vi, where N is equal to the number of data points obtained from the chromatogram between the integration limits.

A high temperature GPC instrument, equipped with either infrared (IR) detector (IR4 or IR5 from PolymerChar (Valencia, Spain)) or differential refractometer ((RI from Agilent Technologies, equipped with 3 x Agilent-PLgel Olexis and 1x Agilent-PLgel Olexis Guard columns) was used. As mobile phase 1,2,4-trichlorobenzene (TCB) stabilized with 250 mg/L 2,6-Di tert-butyl-4-methylphenol) was used. The chromatographic system was operated at column temperature of 160 °C and detector at 160 °C and at a constant flow rate of 1 mL/min. 200 $\mu$L of sample solution was injected per analysis. Data collection was performed using either Agilent Cirrus software version 3.3 or PolymerChar GPC-IR control software.

The column set was calibrated using 19 narrow MWD polystyrene (PS) standards in the range of from 0.5 kg/mol to 11 500 kg/mol. The PS standards were dissolved at room temperature over several hours. The conversion of the polystyrene peak molecular weight to polyolefin molecular weights is accomplished by using the Mark-Houwink equation and the following Mark-Houwink constants:

$K_{PS}$ = 19 x $10^{-3}$ mL/g, $\alpha_{PS}$ = 0.655

**$K_{PE}$ = 39 x $10^{-3}$ mL/g, $\alpha_{PE}$ = 0.725**

A third order polynomial fit was used to fit the calibration data.

All samples were prepared in the concentration range of around 1 mg/ml and dissolved at 160 °C for 3 (three) hours for PE in fresh distilled TCB stabilized with 250 ppm Irgafos168 under continuous gentle shaking.

*(2) GPC viscosity method*

Molecular weight averages ($M_z$, $M_w$ and $M_n$), molecular weight distribution (MWD) of LDPE is measured by GPC-viscosity method using universal calibration. Molecular weight averages ($M_w$, $M_n$), Molecular weight distribution (MWD) and its broadness, described by polydispersity index, PDI= $M_w/M_n$ (wherein $M_n$ is the number average molecular weight and $M_w$ is the weight average molecular weight) were determined by Gel Permeation Chromatography (GPC) according to ISO 16014-4 2019. A PL 220 (Polymer Laboratories) GPC equipped with an IR4 infrared detector, an online four capillary bridge viscometer (PL-BV 400-HT) was used. 3x Olexis and 1x Olexis Guard columns from Polymer Laboratories as stationary phase and 1,2,4-trichlorobenzene (TCB, stabilized with 250 mg/L 2,6-Di tert butyl-4-methyl-phenol) as mobile phase at 160°C and at a constant flow rate of 1 mL/min was applied. 200 $\mu$L of sample solution were injected per analysis. The corresponding detector constant of the viscometer as well as the inter-detector delay volumes were determined with a narrow PS standard (MWD = 1.01) with a molar mass of 132900 g/mol and an intrinsic viscosity of 0.4789 dl/g. The detector constant of the IR4 detector was determined using NIST1475a with dn/dc of 0.094 $cm^3$/g.

The column set was calibrated using universal calibration (according to ISO 16014-2:2019) with at least 15 narrow MWD polystyrene (PS) standards in the range of 0.5 kg/mol to 11600 kg/mol. The corresponded intrinsic viscosities of the PS standards were calculated from their corresponding concentration (IR4), online viscometer signals, and determined detector constants for polystyrene. For low molecular weight PS with a molar mass below 3000 g/mol the initial weight out concentration is used, due to end group effects in the IR detector.

The molecular weight of the sample ($M_2$) at each chromatographic slice using the universal calibration approach can be calculated by following correlation:

$$logM_1[\eta_1] = V_R = logM_2[\eta_2]$$

with:

M$_1$ Molar mass of PS
n$_1$ intrinsic viscosity of the PS
M$_2$ Molar mass of sample
$\eta_2$ intrinsic viscosity of sample
V$_R$ Retention volume

All data processing and calculation was performed using the Cirrus Multi-Offline SEC-Software Version 3.2 (Polymer Laboratories a Varian inc. Company).

All samples were prepared by dissolving 5.0 - 9.0 mg of polymer in 8 mL (at 160°C) of stabilized TCB (same as mobile phase) for 2.5 hours for PP or 3 hours for PE at max. 160°C under continuous gentle shaking.

**d)** Comonomer Content

The comonomer content was determined as indicated in WO2019081611, pages 31 to 34.

**e)** Mechanical Properties

*(1) Tensile Modulus*

Tensile modulus in machine direction (MD) and in transverse direction (TD) were determined as 1 % secant modulus with 1 mm/min test speed and 100 mm gauge length according to ISO 527-3.

*(2) Tensile Stress at Break*

Tensile stress at break (also known as tensile strength) in machine direction (MD) and in transverse direction (TD) were determined according to ISO 527-3 with specimen Type 2 with 50 mm gauge length and 200 mm/min test speed.

*(3) Dart Drop Impact*

Dart drop impact was determined according to ASTM D1709 - Method A.

*(4) Relative Tear Resistance*

Relative tear resistance in MD and TD was determined according to ISO 6383-2.

**h)** Barrier Properties

*(1) Water Vapor Transmission Rate (WVTR)*

Water vapor transmission rates were determined under tropical conditions (38 °C; 90 % RH) according to ISO 15106-2.

*(2) Oxygen Transmission Rate (OTR)*

Oxygen transmission rates were determined according to ISO 15105-1 under standard conditions (23 °C; 100 % $O_2$; 0 % RH).

**i)** Heat Seal Parameters

The seal initiation temperature (SIT) at 5 N force and the maximum seal force were determined according to ASTM F2029 and ASTM F88.

**j)** Xylene Solubles (XS)

The xylene soluble (XS) fraction as described in the present invention was determined in line with ISO 16152 as follows: 2.0 g of the polymer were dissolved in 250 ml p-xylene at 135 °C under agitation. After 30 minutes, the solution was allowed to cool for 15 minutes at ambient temperature and then allowed to settle for 30 minutes at 25 +/- 0.5 °C. The solution was filtered with filter paper into two 100 ml flasks. The solution from the first 100 ml vessel was evaporated in nitrogen flow and the residue dried under vacuum at 110 °C until constant weight is reached (approximately three hours). The xylene soluble fraction (percent) can then be determined as follows:
$XS\% = (100*m*V_0)/(m_0*v)$; $m_0$ = initial polymer amount (g); m = weight of residue (g); $V_0$ = initial volume (ml); v = volume of analyzed sample (ml).

**k)** Contact Angle

The contact angle was determined in accordance with ASTM D-7334 as follows. The contact angle of the polymer film was measured according to the sessile drop technique. Water drops of known density were put onto the film surface. The instrument for measuring the contact angle was composed of a light source, a sample holder, a syringe for the deposition of a drop of liquid and an image acquisition system. The samples to be analyzed were specimens of size range between 1 x 1 $cm^2$ to about 10 x 10 $cm^2$. For each drop the contact angle $\theta$ to the polymer surface was measured. The achieved images were processed by an appropriate software, which allowed to obtain the contact angle. The contact angle value may be correlated to the cleanability and slipperiness of the surface.

**l)** Surface Tension Retention

Surface Tension Retention was determined according to ASTM D-2578.

**m)** Metal Adhesion

Metal adhesion was measured using a tape test. A sample of the metallized substrate was placed on a smooth, flat surface, with the metallized layer facing up. Subsequently, 6 in (15.24 cm) of Scotch™ 610 adhesive tape was applied to the surface, and smoothed with the thumb and forefinger to ensure good contact. To facilitate separation, one end of the tape should be doubled over. Then, while holding the sample with one hand, the other hand peels the tape back approximately 180° in one smooth movement. The test substrate was afterwards examined for metal removal, and the used tape for metal transfer, using a strong backlight.

**m)** Melting Point

Melting point was determined according to ISO 11357-3.

**_Examples_**

Barrier coated (metallized) films and laminated films (laminates) were produced and measured as described below.

1) Preparation of sealant films

_a) Preparation of 5-layer sealant films_

Three comparative films (Comparative Examples CE-1, CE-2 and CE-3) and one film in accordance with the invention (Inventive Example IE-1) were produced as 5-layer blown films.

Table 1 provides the structures and compositions of the comparative and inventive films, wherein layer A denotes the outer (external) layer corresponding to the film layer used for vacuum metallization. Layer B denotes the first sub-skin layer - in-between the outer layer and core layer (core layer C); layer D denotes the second sub-skin layer - in-between the core layer C and the inner (sealing) layer E. The outer layer and inner (sealing) layers (layers A and E) each made up 10 %, the sub-skin layers 1 and 2 each made up 15 % and the core layer made up 50 % of the total film thickness, which was about 35 μm.

The polymers used in the layers are indicated by their trade names. The contents of the polymers in the layers in Table 1 are provided in wt.%, based on the total weight of the respective layer composition.

Table 1:

| Samples | Outer layer (layer for metallization) | Sub-skin layer 1 | Core layer | Sub-skin layer 2 | Inner layer (sealing layer) |
|---|---|---|---|---|---|
| Film layer | Layer A | Layer B | Layer C | Layer D | Layer E |
| Layer thickness (%) | 10 | 15 | 50 | 15 | 10 |
| Layer thickness (μm) | 3.5 | 5.5 | 17.5 | 5.5 | 3.5 |
| **M3 CE-1** | 80% BB127E + 20% RB707CF | 80% FK1820 + 20% FT5230 | 55% FK1820 + 45% FX1001 | 80% FK1820 + 20% FT5230 | 80% FK1820 + 19% FT5230 + 1% Antiblock |
| **M5 CE-2** | 100% RB707CF | 80% FK1820 + 20% FT5230 | 55% FK1820 + 45% FX1001 | 80% FK1820 + 20% FT5230 | 80% FK1820 + 19% FT5230 + 1% Antiblock |
| **M9 CE-3** | 60% TD309BF + 40% RB707CF | 80% FK1820 + 20%FT5230 | 55% FK1820 + 45% FX1001 | 80% FK1820 + 20% FT5230 | 80% FK1820 + 19% FT5230 + 1% Antiblock |
| **M6 IE-1** | 100% HC320BF | 80% FK1820 + 20% FT5230 | 55% FK1820 + 45% FX1001 | 80% FK1820 + 20% FT5230 | 80% FK1820 + 19% FT5230 + 1% Antiblock |
| Antiblock: Polybatch FSU-105-E | | | | | |

Characteristics of the polymers used for making the films of the inventive and comparative examples as depicted in Table 1 are given in Table 2 below.

Table 2:

| Resin name | Producer | Type | MFR$_2$ (g/ 10min) | Density (kg/m$^3$) | Melting Point (°C) |
|---|---|---|---|---|---|
| Anteo FK1820 | Borouge | bimodal LLDPE terpolymer | 1.5 | 918 | 122 |
| LDPE FT5230 | Borealis/ Borouge | tubular LDPE | 0.75 | 923 | 112 |
| Borshape FX1001 | Borealis | bimodal ethylene terpolymer | 0.9 | 931 | 127 |
| TD309BF | Borealis | C2/C4 propylene terpolymer | 6.0 | 900 | 132 |
| HC320BF | Borealis | propylene homopolymer | 3.2 | 900 | 165 |
| Borcoat BB127E | Borealis | grafted polypropylene adhesive | 7.5 | 900 | 165 |
| Borclear RB707CF | Borealis | polypropylene random copolymer | 1.5 | 900 | 145 |

Processability of the resins and the 5-layer films having an A/B/C/D/E structure were evaluated on a large scale blown film equipment. The 5-layer blown films were produced using an Alpine-make blown film line. Performance of the films was analyzed on blown films with a thickness of about 35 μm produced at the below process operating conditions with die-gap of 1.8 mm, lower neck-height and blow up ratio of 3.0:1. The blown film lines had the properties as listed in Table 3.

Table 3:

| | |
|---|---|
| Die diameters | 300 mm |
| Die gap | 1.8 mm |
| Blow up ratio (BUR) | 3.0:1 |
| Bubble cooling | IBC |
| Cooling air temperature | 22 °C |
| Corona treatment | 48 dyn/cm |

The temperature profiles of the blown film lines i.e., the temperatures (in °C) used for different locations of the blown film lines, were as indicated in Table 4.

Table 4:

| M3 (CE-1) | | | | | | | | |
|---|---|---|---|---|---|---|---|---|
| Layer | Extruder zone 1 | Extruder zone 2 | Extruder zone 3 | Extruder zone 4 | Extrud er zone 5 | Extruder zone 6 | Post Extruder zone 7 | Post Extruder zone 8 |
| Outer layer (A) | 170 | 180 | 180 | 180 | 180 | 180 | 180 | - |
| Sub-skin layer 1 (B) | 190 | 190 | 190 | 190 | 190 | 190 | 190 | - |
| Core layer (C) | 210 | 210 | 210 | 210 | 210 | 220 | 220 | 220 |
| Sub-skin layer 2 (D) | 190 | 190 | 190 | 190 | 190 | 190 | 190 | - |

(continued)

| M3 (CE-1) | | | | | | | | |
|---|---|---|---|---|---|---|---|---|
| Layer | Extruder zone 1 | Extruder zone 2 | Extruder zone 3 | Extruder zone 4 | Extrud er zone 5 | Extruder zone 6 | Post Extruder zone 7 | Post Extruder zone 8 |
| Inner layer (E) | 190 | 190 | 190 | 190 | 190 | 190 | 190 | - |

| M5 (CE-2) | | | | | | | | |
|---|---|---|---|---|---|---|---|---|
| Layer | Extruder zone 1 | Extruder zone 2 | Extruder zone 3 | Extruder zone 4 | Extruder zone 5 | Extruder zone 6 | Post Extruder zone 7 | Post Extruder zone 8 |
| Outer layer (A) | 220 | 220 | 220 | 220 | 220 | 230 | 230 | - |
| Sub-skin layer 1 (B) | 190 | 190 | 190 | 190 | 190 | 190 | 190 | |
| Core layer (C) | 40 | 220 | 220 | 220 | 220 | 230 | 230 | 230 |
| Sub-skin layer 2 (D) | 190 | 190 | 190 | 190 | 190 | 190 | 190 | - |
| Inner layer (E) | 190 | 190 | 190 | 190 | 190 | 190 | 190 | - |

| M9 (CE-3) | | | | | | | | |
|---|---|---|---|---|---|---|---|---|
| Layer | Extruder zone 1 | Extruder zone 2 | Extruder zone 3 | Extruder zone 4 | Extrud er zone 5 | Extruder zone 6 | Post Extruder zone 7 | Post Extruder zone 8 |
| Outer layer (A) | 220 | 220 | 220 | 220 | 220 | 230 | 230 | - |
| Sub-skin layer 1 (B) | 190 | 190 | 190 | 190 | 190 | 190 | 190 | |
| Core Layer (C) | 40 | 220 | 220 | 220 | 220 | 230 | 230 | 230 |
| Sub-skin layer 2 (D) | 190 | 190 | 190 | 190 | 190 | 190 | 190 | - |
| Inner layer (E) | 190 | 190 | 190 | 190 | 190 | 190 | 190 | - |

| M6 (IE-1) | | | | | | | | |
|---|---|---|---|---|---|---|---|---|
| Layer | Extruder zone 1 | Extruder zone 2 | Extruder zone 3 | Extruder zone 4 | Extrud er zone 5 | Extruder zone 6 | Post Extruder zone 7 | Post Extruder zone 8 |
| Outer layer (A) | 220 | 220 | 220 | 220 | 220 | 230 | 230 | - |
| Sub-skin layer 1 (B) | 190 | 190 | 190 | 190 | 190 | 190 | 190 | - |

(continued)

| M6 (IE-1) | | | | | | | | |
|---|---|---|---|---|---|---|---|---|
| Layer | Extruder zone 1 | Extruder zone 2 | Extruder zone 3 | Extruder zone 4 | Extrud er zone 5 | Extruder zone 6 | Post Extruder zone 7 | Post Extruder zone 8 |
| Core layer (C) | 40 | 220 | 220 | 220 | 220 | 230 | 230 | 230 |
| Sub-skin layer 2 (D) | 190 | 190 | 190 | 190 | 190 | 190 | 190 | - |
| Inner layer (E) | 190 | 190 | 190 | 190 | 190 | 190 | 190 | - |

*b) Properties of the 5-layer polyethylene sealant films (non-coated)*

*Tensile modulus*

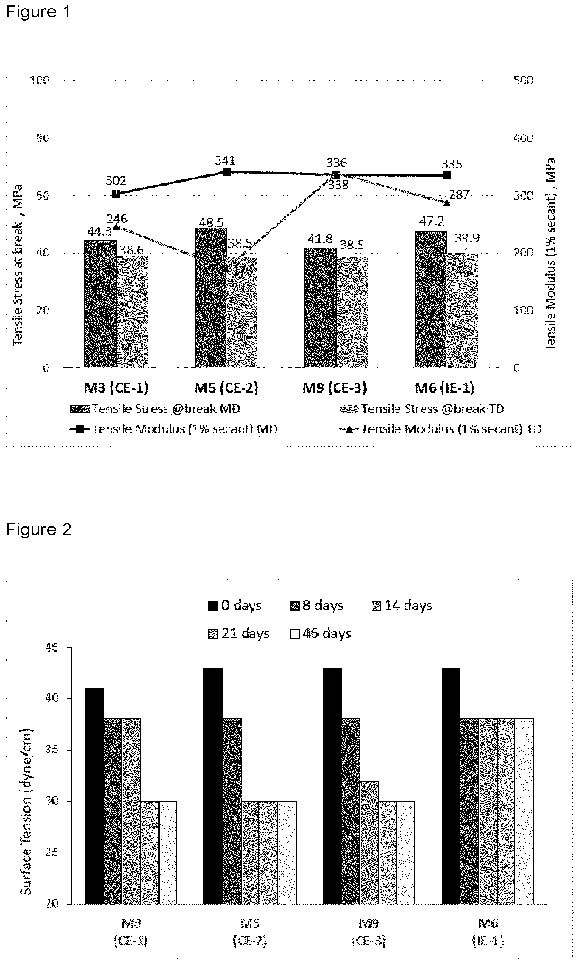

As shown in Figure 1, very good results of tensile modulus (1 % secant) were obtained for the inventive film and the comparative films. In particular, in the machine direction (MD), all films showed values more than 300 MPa. This means that films comprising a polypropylene component in the outer layer exhibit sufficient stiffness, which provides very good body for coating as they are able to withstand film tension during the process. Use of bimodal terpolymers, such as Borshape FX1001 and Anteo FK1820, in the core layer may further improve stiffness of the films.

*Tensile strength*

As further depicted in Figure 1, good results for the tensile strength (tensile stress at break) were obtained for all films, in both machine direction (MD) and transverse direction (TD). In MD, the inventive film IE-1 and comparative film CE-2 showed the best results, in TD the IE-1 film had the highest value.

*Contact angles*

As depicted in Table 5 below, all polypropylene materials used in the outer layer of the films showed very good contact angles (on non-coated surfaces) of less than 90°. Thus, all these materials are suitable for coating, as low contact angles (before coating) are required for good wetting of the surface for coating and good adhesion after coating. The contents of the polypropylene materials are given in wt.%, based on the total weight of the respective outer layer composition.

Table 5:

| Examples | Outer layer | Contact angle (degrees) non-metallized films |
|---|---|---|
| **M3 (CE-1)** | 80% BB127E + 20% RB707CF | 78 |
| **M5 (CE-2)** | 100% RB707CF | 79 |
| **M9 (CE-3)** | 60% TD309BF + 40% RB707CF | 76 |
| **M6 (IE-1)** | 100% HC320BF | 78 |

*Surface structure in microscope*

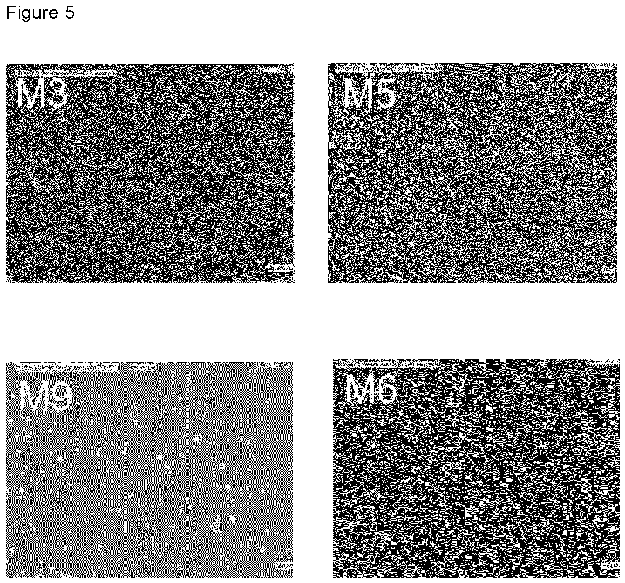

Referring to Figure 5, optical microscope images of the non-coated films (outer layer surface) at a 200x magnification are shown. In particular, for the CE-3/M9 film prominent surface defects were detected, in the form of circular dots and scratch marks. The other films performed much better, with the IE-1/M6 film showing the smoothest surface with the smallest number of surface defects.

*Xylene solubles*

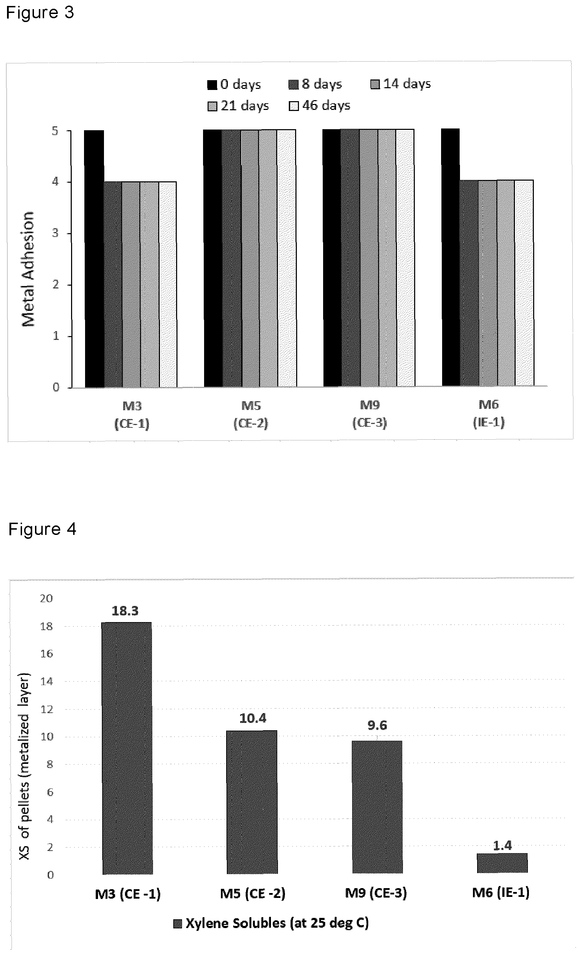

The xylene soluble (XS) fraction was determined for the compositions of the outer layers of the films and the results are illustrated in Figure 4. As can directly be seen, the inventive film IE-1 has an extremely low xylene soluble fraction of 1.4 wt.% only. All comparative films showed significantly higher xylene soluble fractions (all more than 9 wt.%, and up to 18 wt.%). As the xylene soluble fraction is connected with surface tension, better results for surface energy (lower dyne decay over time) are reached for the inventive films.

*Film barrier performance (WVTR and OTR)*

Both water vapor transmission rate - WVTR (38 °C; 90 % RH) - and oxygen transmission rate - OTR (23 °C; 100 % $O_2$; 0 % RH) - were measured on the films before and after coating by metallization, according to ISO 15106-2 and ISO 15105-1, respectively. With reference to Table 8 below, the inventive film IE-1 before coating already showed the lowest WVTR (8.1 $g/m^2/d$) and OTR (3900 $cm^3/m^2/d$) values. Coating highly improved the barrier properties as discussed below.

2) Coated films

*a) Coating (metallization) process*

The 5-layer films described above were coated using a plasma metalizer obtaining an optical density of 2.3. Metallization of the outer layer (corona treated side) was performed by a physical vapor deposition process after a light plasma pre-treatment. The metal (aluminum) was heated to evaporation under vacuum and was then condensed on the outer layer surface resulting in a layer of about 10-20 nm.

*b) Properties of the coated (metallized) films*

*Surface Tension (Dyne decay)*

Figure 2 shows the surface tension decay as a function of time, measured on metallized films at regular intervals (0, 8, 14, 21 and 46 days) after metallization.
High surface tension (dyn/cm) of coated films is important for subsequent processing and use of the films. According to Figure 2, decrease of the surface energy on the metalized surface can be observed for the comparative examples. After 21 days, the inventive film IE-1 is the only film still showing high surface energy. Most of the comparative films were already below 36 dyn/cm just 14 days after metallization. Thus, only the inventive film maintained a level of surface energy suitable for converting, without requiring corona treatment or primer use.

*Metal adhesion*

Metal adhesion was measured according to the "tape test" procedure described above. The films were tested for metal adhesion at regular intervals (0, 8, 14, 21 and 46 days) after metallization. Table 7 shows and Figure 3 illustrates the results obtained for metal adhesion, based on the requirements depicted in Table 6 for ranking the results. The contents of the polymers in the layers in Table 7 are provided in wt.%, based on the total weight of the respective layer composition.

Table 6:

| Maximum dimensions of delaminated metal surface | Number of delaminated areas | Ranking | Evaluation | QC passed |
|---|---|---|---|---|
| | Zero | 5 | Very good | Yes |
| 0,1 mm | Less than 10 points | 4 | Good | Yes |
| 0,1 mm | Less than 50 points | 3 | Limit | Non/to be discussed |
| 0,1 mm | More than 100 points | 1 | Bad | Non |
| 0,2 mm | Less than 100 points | 2 | Limit | Non |
| > 0,2 mm | | 1 | Bad | Non |

Table 7:

| Days after metallization | | 0 day | 8 days | 14 days | 21 days | 46 days |
|---|---|---|---|---|---|---|
| **Example** | Outer layer | | | | | |
| **M3 (CE-1)** | 80% BB127E + 20% RB707CF | 5 | 4 | 4 | 4 | 4 |
| **M5 (CE-2)** | 100% RB707CF | 5 | 5 | 5 | 5 | 5 |
| **M9 (CE-3)** | 60% TD309BF + 40% RB707CF | 5 | 5 | 5 | 5 | 5 |
| **M6 (IE-1)** | 100% HC320BF | 5 | 4 | 4 | 4 | 4 |

All films show excellent metal adhesion with a ranking of 4 or 5. In particular, metal adhesion remained stable over the measurement time of 46 days for all films. To avoid potential negative effects through migratory additives, such additives were not used in the films.

*Surface structure in microscope (after coating)*

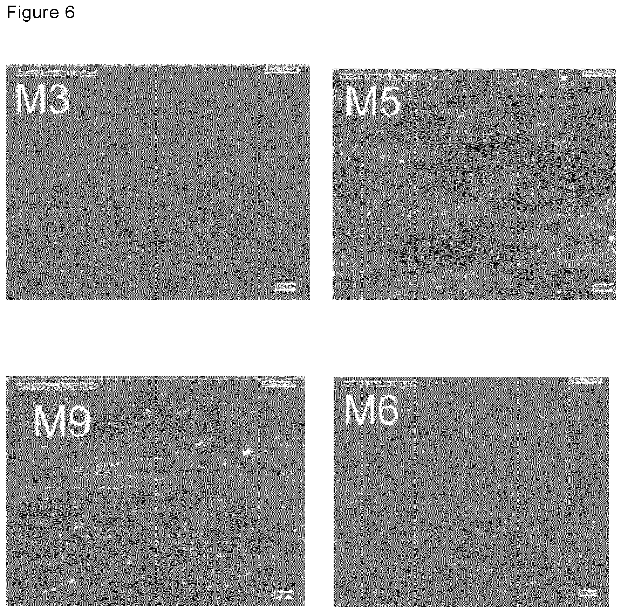

Referring to Figure 6, optical microscope images of the metallized films (outer layer surface) at a 200x magnification are shown. Also after metallization, the CE-3/M9 film showed surface defects. Similar defects were detected for the CE-2/M5 film. The IE-1/M6 film showed a very smooth and clean surface, together with the CE-1/M3 film.

*Film barrier performance (WVTR and OTR)*

Both water vapor transmission rate - WVTR (38 °C; 90 % RH) and oxygen transmission rate OTR (23 °C; 100 % $O_2$; 0 % RH) were measured on the films before and after coating, according to ISO 15106-2 and ISO 15105-1, respectively. The results are shown in Table 8 below.

Significant improvements of WVTR and OTR were measured for the metallized films vs. non-metallized films. Excellent results in terms of WVTR and OTR were achieved by the inventive film IE-1, followed by the comparative film CE-3; IE-1 having a WVTR of less than 1.0 g/m²/day, and an OTR of less than 150 cm³/m²/day. The contents of the polymers in the layers in Table 8 are provided in wt.%, based on the total weight of the respective layer composition.

Table 8:

| Sample | Outer layer | Metallized films | | Non-metallized films | |
|---|---|---|---|---|---|
| | | WVTR (g/m²/d) | OTR (cm³/m²/d) | WVTR (g/m²/d) | OTR (cm³/m²/d) |
| **M3 (CE-1)** | 80% BB127E + 20% RB707CF | 1.35 | >200 | 8.5 | 4400 |
| **M5 (CE-2)** | 100% RB707CF | 0.30 | >200 | 9.3 | 4880 |
| **M9 (CE-3)** | 60% TD309BF + 40% RB707CF | 0.97 | 72.4 | 8.8 | 4460 |
| **M6 (IE-1)** | 100% HC320BF | 0.64 | 117 | 8.1 | 3900 |

*Summary*

In summary, the inventive film IE-1 showed best performance for use in metallized films for potential packaging applications. Although, in particular CE-3/M9 showed good performance, in e.g. barrier properties, however, the composition used in the outer layer of CE-3/M9 had a high xylene soluble fraction (~10 wt.%) and exhibited very fast surface energy decay, why it may encounter drawbacks in long term use in the field of barrier coated packaging applications.

3) Laminated films

*a) Preparation of laminated films*

Laminated films are widely used for packaging applications. The metallized inventive film and two metallized comparative films, CE-2 and CE-3, which showed the best performance, were laminated to machine direction oriented (MDO) polyethylene substrate films.

*Preparation of the primary substrate films*

Primary substrate films were prepared on blown film lines as 5-layer films having the compositions and layer distribution as shown in Table 9. FX1001 is an LLDPE polymer and BB2581 and CG9620 are HDPE polymers. For all extruders, zones 1-5 were heated at 180 °C, and the screen changer at 195 °C. Primary films with a thickness of 140 μm were obtained.

Table 9:

| Polymers | Outer layer | Sub-skin layer 1 | Core layer | Sub-skin layer 2 | Inner layer |
|---|---|---|---|---|---|
| Layer thickness (%) | 15 | 10 | 50 | 10 | 15 |
| FX1001 | | | 70 | | |
| BB2581 | 80 | 80 | 30 | 80 | 80 |
| CG9620 | 20 | 20 | | 20 | 20 |

*Orientation of the primary substrate films*

The primary films were oriented in machine direction resulting in machine direction oriented (MDO) films. The primary films were heated to an orientation temperature, the heating being performed utilizing multiple heated rollers. The heated primary films were then fed into a slow drawing roll with a nip roller, which had the same rolling speed as the heated rollers. After that, the primary films entered a fast drawing roll and were uniaxially stretched for 5 to 7 (presently 6.5) times faster than by the slow drawing roll. This effectively oriented the film on a continuous basis. The oriented films were annealed by holding the films at an elevated temperature for a period of time to allow for stress relaxation.

Stretching was carried out using a mono-directional stretching machine manufactured by Hosokawa Alpine AG in Augsburg/Germany. The process unit consisted of preheating, drawing, annealing and cooling sections, with each set being at specific temperatures to optimize the performance of the process unit and produce films with the desired properties. The heating temperature was 105 °C, the stretching temperature was 117 °C, annealing and cooling was done at 110 °C down to 40 °C. In this way MDO substrate films with a thickness of 21.5 μm were obtained. (Primary film thickness was 140 μm and the draw ratio was 1:6.5).

*Lamination*

To prepare the laminated films, the outer layers of the MDO substrate films were laminated to the metallized outer layers of the IE-1, CE-2 and CE-3 films. As the MDO substrate films were made of polyethylene, the content of polypropylene in the laminated film was less than 7 wt.%.

The metallized films were laminated at Henkel Corporation using adhesive LA7825 and hardener LA6230 (both supplied by Henkel), mixed at a 2:1 ratio. Lamination was done on a solvent-less laminator at a running speed of 150 m/min with an adhesive content of 1.8 g/m$^2$. The corona treatment intensity on the carrier web was 2.5 kW and on the secondary web 1.5 kW. Laminated films with a thickness of about 62 μm were prepared.

*b) Properties of the laminated films*

Table 10 shows the properties of the prepared laminated films.

Table 10:

| Laminate details | unit | Laminate of M9 (CE-3) | Laminate of M5 (CE-2) | Laminate of M6 (IE-1) |
|---|---|---|---|---|
| Thickness | μm | 61 | 62 | 62 |

(continued)

| Laminate details | unit | Laminate of M9 (CE-3) | Laminate of M5 (CE-2) | Laminate of M6 (IE-1) |
|---|---|---|---|---|
| SIT | ° C | 93 | 92 | 92 |
| Dart drop impact (DDI) | 9 | 128.0 | 143.0 | 158.0 |
| Relative tear resistance in MD | N/mm | 35.9 | 32.1 | 38.5 |
| Relative tear resistance in TD | N/mm | 42.7 | 44.9 | 75.1 |
| Tensile modulus in MD | MPa | 1048 | 1073 | 1113 |
| Tensile modulus in TD | MPa | 1112 | 1122 | 1160 |
| WVTR | $g/m^2/d$ | 0.26 | 2.48 | 0.24 |
| OTR | $cm^3/m^2/d$ | 5.6 | 389 | 4.2 |

*Tensile modulus*

Both tensile moduli, MD and TD, were higher in the inventive laminated film over the comparative laminated films, resulting in higher stiffness of the inventive laminated film.

*Dart drop impact and relative tear resistance*

Both dart drop impact and relative tear resistance (MD and TD) are important to maintain high mechanical performance of the laminates. These parameters were higher in the inventive laminated film over both comparative laminated films. In particular, with respect to the CE-3 laminated film, the dart drop impact of the inventive laminated film was enhanced by more than 20 %.

*Barrier properties*

Best moisture barrier performance i.e. water vapor transmission rate (WVTR), was observed for the inventive laminated film. The CE-3 laminated film showed comparable results. The CE-2 laminated film showed a 10-times higher value. Values of less than 0.5 $g/m^2/d$ are generally preferred for good performance.

Similar ranking was observed for the oxygen barrier (OTR) performance of the laminated films, where the inventive laminated film performed best, followed by the CE-3 laminated film; and the CE-2 laminated film showing an about 100-times higher value. Values of less than 15 $cm^3/m^2/day$ are generally preferred for good performance.

**Claims**

1. A polyolefin sealant film comprising an outer layer made of an outer layer composition comprising a propylene polymer component AO, wherein the outer layer composition has a xylene soluble (XS) fraction of less than 3.5 wt.%, determined according to ISO 16152.

2. The polyolefin sealant film according to claim 1, wherein the propylene polymer component AO in the outer layer composition comprises a propylene homopolymer, preferably an isotactic propylene homopolymer, and more preferably a propylene homopolymer having an $MFR_2$ of from 1.0 to 5.0 g/10min, determined according to ISO 1133, and/or a melting point of from 155 to 175 °C, determined according to ISO 11357-3.

3. The polyolefin sealant film according to any one of the preceding claims, wherein the outer layer composition comprises from 90 to 100 wt.%, preferably from 95 to 100 wt.% and most preferably from 98 to 100 wt.% of the propylene polymer component AO, based on the total weight of the outer layer composition; and/or wherein the sealant film comprises a barrier coating layer on the outer layer, wherein the barrier coating layer preferably comprises a barrier coating component selected from the group consisting of the metals Al, Au, Ag, Cr, Zn, Ti, Si and Cu and oxides of these metals, and mixtures thereof.

4. The polyolefin sealant film according to any one of the preceding claims, wherein the sealant film further comprises a core layer and an inner layer, and optionally one or more sub-skin layers, wherein at least one of the layers is made of a composition comprising a linear low density polyethylene (LLDPE) component, preferably a multimodal copolymer component (AC), and/or a catalytically produced polyethylene component (BC), which is an ethylene copolymer, preferably an ethylene terpolymer (II), having a melt flow rate $MFR_5$ of from 0.6 to 4 g/10min, determined according to ISO 1133, and/or a high pressure produced low density polyethylene (LDPE) component (CC).

5. The polyolefin sealant film according to claim 4, wherein the sealant film comprises from 40 to 70 wt.% of the AC component; and/or from 15 to 35 wt.% of the BC component; and/or from 5 to 15 wt.% of the CC component, based on the total weight of the sealant film.

6. The polyolefin sealant film according to any one of claims 4 or 5, wherein the AC component has a density of from 910 to 925 $kg/cm^3$ and an $MFR_2$ of from 0.5 to 5.0 g/10min; and/or the BC component has a density of from 920 to 940 $kg/cm^3$ and an $MFR_2$ of from 0.1 to 2.0 g/10min; and/or the CC component has a density of from 910 to 930 $kg/cm^3$ and an $MFR_2$ of from 0.1 to 2.5 g/10min, the $MFR_2$ being determined according to ISO 1133.

7. The polyolefin sealant film according to any one of the preceding claims, wherein the sealant film has an oxygen transmission rate (OTR) (23 °C; 100 % $O_2$; 0 % RH) of less than 200 $cm^3/m^2/d$, determined according to ISO 15105-1; and/or a water vapor transmission rate (WVTR) (38 °C; 90 % RH) of less than 1.5 $g/m^2/d$, determined according to ISO 15106-2.

8. A laminated polyolefin film comprising the polyolefin sealant film according to any one of the preceding claims and a substrate film.

9. The laminated polyolefin film according to claim 8, wherein the laminated polyolefin film has:

   a) a water vapor transmission rate (WVTR) (38 °C; 90 % RH) of less than 1.0 $g/m^2/d$, determined according to ISO 15106-2; and/or
   b) an oxygen transmission rate (OTR) (23 °C; 100 % $O_2$; 0 % RH) of less than 25 $cm^3/m^2/d$, determined according to ISO 15105-1; and/or
   c) a dart drop impact (DDI) of at least 145 g, determined according to ASTM D1709, Method A; and/or
   d) a tensile modulus in machine direction (MD) of at least 800 MPa, determined according to ISO 527-3; and/or
   e) a thickness of from 50 to 90 $\mu$m.

10. A laminated polyolefin film comprising a substrate film and a sealant film, wherein the laminated polyolefin film has:

    a) a water vapor transmission rate (WVTR) (38 °C; 90 % RH) of less than 1.0 $g/m^2/d$, determined according to ISO 15106-2;
    b) an oxygen transmission rate (OTR) (23 °C; 100 % $O_2$; 0 % RH) of less than 25 $cm^3/m^2/d$, determined according to ISO 15105-1;
    c) a dart drop impact (DDI) of at least 145 g, determined according to ASTM D1709, Method A;
    d) a tensile modulus in machine direction (MD) of at least 800 MPa, determined according to ISO 527-3; and
    e) a thickness of from 50 to 90 $\mu$m.

11. The laminated polyolefin film according to claim 10, wherein the laminated polyolefin film comprises a polyolefin sealant film according to any one of claims 1 to 7.

12. The laminated polyolefin film according to any one of claims 8 to 11, wherein the substrate film comprises at least one ethylene polymer, preferably consists of at least one ethylene polymer.

13. The laminated polyolefin film according to any one of claims 8 to 12, wherein the laminated polyolefin film comprises the propylene polymer component AO in a content of less than 10 wt.%, preferably less than 8 wt.%, more preferably less than 7 wt.%, based on the total weight of the laminated polyolefin film; and/or the at least one ethylene polymer in a content of at least 90 wt.%, based on the total weight of the laminated polyolefin film.

14. An article comprising the laminated polyolefin film according to any one of claims 8 to 13.

15. Use of the laminated polyolefin film according to any one of claims 8 to 13 for producing an article, preferably a vertical or horizontal form fill seal packaging, pouch, sack or bag.

Figure 1

Figure 2

Figure 3

Figure 4

Figure 5

Figure 6

Europäisches
Patentamt

European
Patent Office

Office européen
des brevets

# EUROPEAN SEARCH REPORT

Application Number

EP 21 16 0083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/066856 A1 (MASSARI PAOLA [IT] ET AL) 9 March 2017 (2017-03-09) <br> * abstract; claims 1-10 * <br> * example 1 * <br> * paragraphs [0024], [0025] * <br> ----- | 1,3,4 | INV. <br> B32B27/08 <br> B32B27/30 <br> B32B27/32 <br> C08J5/18 <br> C08L23/08 |
| X <br><br> A | US 6 994 915 B2 (BASELL POLIOLEFINE SRL [IT]) 7 February 2006 (2006-02-07) <br> * abstract; claims 1-7 * <br> * column 1, line 15 * <br> * examples 1,2,3,4,5; tables 1,2 * <br> * column 5, line 60 - column 6, line 65 * <br> * column 6 * <br> ----- | 1,2 <br><br> 4-15 | C08L23/12 <br> C08L23/14 |
| X <br><br> A | US 7 794 845 B2 (BASELL POLIOLEFINE SRL [IT]) 14 September 2010 (2010-09-14) <br> * abstract; claims 1-12; examples 1,2 * <br> ----- | 1,2 <br><br> 3 | |
| X | EP 0 723 978 B1 (SUMITOMO CHEMICAL CO [JP]) 30 December 1998 (1998-12-30) <br> * abstract; claims 1-6 * <br> ----- | 1,2 | |
| A | WO 2017/102704 A1 (BOREALIS AG [AT]) 22 June 2017 (2017-06-22) <br> * abstract; claims 1-13 * <br> ----- | 1-15 | TECHNICAL FIELDS SEARCHED (IPC) <br><br> B32B <br> C08J <br> C08L |
| A | WO 2008/033622 A2 (EXXONMOBIL OIL CORP [US]; URBAIN LAURENCE DOMINIQUE [FR] ET AL.) 20 March 2008 (2008-03-20) <br> * abstract; claims 1-30 * <br> ----- | 1-15 | |
| A | WO 2017/087809 A1 (JINDAL FILMS AMERICAS LLC [US]) 26 May 2017 (2017-05-26) <br> * abstract; claims 1-20 * <br> ----- | 1-15 | |
| A | US 2009/305069 A1 (GOELDEL ANDREAS [DE] ET AL) 10 December 2009 (2009-12-10) <br> * abstract; claims 1-14 * <br> * paragraphs [0116] - [0119] * <br> ----- | 10,11 | |

The present search report has been drawn up for all claims

| Place of search | Date of completion of the search | Examiner |
|---|---|---|
| The Hague | 9 August 2021 | Bergmans, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 0083

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2021

| Patent document cited in search report | | Publication date | Patent family member(s) | | Publication date |
|---|---|---|---|---|---|
| US 2017066856 | A1 | 09-03-2017 | BR 112016024101 A2 | | 15-08-2017 |
| | | | CN 106255720 A | | 21-12-2016 |
| | | | EP 3140330 A1 | | 15-03-2017 |
| | | | US 2017066856 A1 | | 09-03-2017 |
| | | | WO 2015169652 A1 | | 12-11-2015 |
| US 6994915 | B2 | 07-02-2006 | AR 032024 A1 | | 22-10-2003 |
| | | | AT 553145 T | | 15-04-2012 |
| | | | AU 2002244631 B2 | | 16-11-2006 |
| | | | BR 0108586 A | | 29-04-2003 |
| | | | CA 2406612 A1 | | 25-07-2002 |
| | | | CN 1404500 A | | 19-03-2003 |
| | | | EG 23041 A | | 31-01-2004 |
| | | | EP 1358252 A2 | | 05-11-2003 |
| | | | HU 0204525 A2 | | 28-04-2003 |
| | | | IL 151069 A | | 10-12-2006 |
| | | | JP 2004517199 A | | 10-06-2004 |
| | | | KR 20020076316 A | | 09-10-2002 |
| | | | MX PA03001279 A | | 30-06-2003 |
| | | | MY 128146 A | | 31-01-2007 |
| | | | PL 361274 A1 | | 04-10-2004 |
| | | | TW I238169 B | | 21-08-2005 |
| | | | US 2003165703 A1 | | 04-09-2003 |
| | | | WO 02057342 A2 | | 25-07-2002 |
| | | | ZA 200206915 B | | 28-02-2003 |
| US 7794845 | B2 | 14-09-2010 | AU 2006268772 A1 | | 18-01-2007 |
| | | | BR PI0615501 A2 | | 17-05-2011 |
| | | | CA 2615004 A1 | | 18-01-2007 |
| | | | CN 101218097 A | | 09-07-2008 |
| | | | EP 1901922 A1 | | 26-03-2008 |
| | | | JP 2009500207 A | | 08-01-2009 |
| | | | KR 20080034919 A | | 22-04-2008 |
| | | | US 2009075104 A1 | | 19-03-2009 |
| | | | WO 2007006657 A1 | | 18-01-2007 |
| EP 0723978 | B1 | 30-12-1998 | CA 2168079 A1 | | 27-07-1996 |
| | | | CN 1141312 A | | 29-01-1997 |
| | | | DE 69601231 T2 | | 27-05-1999 |
| | | | EP 0723978 A1 | | 31-07-1996 |
| | | | JP H08198913 A | | 06-08-1996 |
| | | | KR 960029400 A | | 17-08-1996 |
| | | | SG 38921 A1 | | 17-04-1997 |
| | | | US 5726269 A | | 10-03-1998 |
| WO 2017102704 | A1 | 22-06-2017 | CN 109070558 A | | 21-12-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 21 16 0083

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2021

| Patent document cited in search report | Publication date | Patent family member(s) | | Publication date |
|---|---|---|---|---|
| | | EP | 3390049 A1 | 24-10-2018 |
| | | ES | 2819978 T3 | 19-04-2021 |
| | | KR | 20180094974 A | 24-08-2018 |
| | | US | 2018370202 A1 | 27-12-2018 |
| | | WO | 2017102704 A1 | 22-06-2017 |
| WO 2008033622 A2 | 20-03-2008 | CA | 2663507 A1 | 20-03-2008 |
| | | CN | 101535049 A | 16-09-2009 |
| | | EP | 2077945 A2 | 15-07-2009 |
| | | US | 2008070050 A1 | 20-03-2008 |
| | | US | 2011308719 A1 | 22-12-2011 |
| | | WO | 2008033622 A2 | 20-03-2008 |
| WO 2017087809 A1 | 26-05-2017 | CA | 3005872 A1 | 26-05-2017 |
| | | CN | 108473234 A | 31-08-2018 |
| | | EP | 3377418 A1 | 26-09-2018 |
| | | US | 2018257348 A1 | 13-09-2018 |
| | | WO | 2017087809 A1 | 26-05-2017 |
| US 2009305069 A1 | 10-12-2009 | CN | 101163738 A | 16-04-2008 |
| | | EP | 1871832 A1 | 02-01-2008 |
| | | JP | 2008536720 A | 11-09-2008 |
| | | US | 2009305069 A1 | 10-12-2009 |
| | | WO | 2006111448 A1 | 26-10-2006 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013004781 A
- WO 2018077838 A
- WO 2016083208 A
- WO 03066698 A
- WO 2017055174 A
- WO 2019081611 A